# EUROPÄISCHE PATENTSCHRIFT

(11) **EP 2 780 632 B1**
(45) Veröffentlichungstag und Bekanntmachung des Hinweises auf die Patenterteilung: **15.03.2017**
(21) Anmeldenummer: 12778717.4
(22) Anmeldetag: 24.10.2012
(51) Int. Cl.: F22G 5/12, B05B 1/30

(54) **EINSPRITZKÜHLER**
INJECTION COOLER
REFROIDISSEUR À INJECTION

(30) Priorität: 25.10.2011 DE 102011054793
(43) Veröffentlichungstag der Anmeldung: 24.09.2014
(73) Patentinhaber: AVK Holding A/S, 8464 Galten (DK)
(72) Erfinder: SEEWALD, Gerhard, 16515 Oranienburg (DE); FUGMANN, Kay, 16552 Schildow (DE)
(74) Vertreter: Sparing, Rolf Klaus
(86) Internationale Anmeldenummer: PCT/EP2012/071090
(87) Internationale Veröffentlichungsnummer: WO 2013/060748

(56) Entgegenhaltungen:
- WO-A1-94/17330
- DE-A1- 4 317 241
- DE-U1-202010 009 860
- FR-A- 1 196 969
- NL-A- 9 301 125

## Beschreibung

Die Erfindung betrifft einen Einspritzkühler gemäß dem Oberbegriff von Anspruch 1.

Anlagen, die mit Dampf als Energiequelle arbeiten, beispielsweise Anlagen von Energieerzeugungsunternehmen oder Blockheizkraftwerken, sind gewöhnlich so berechnet, dass der verwendete Dampf am Zielort eine bestimmte Temperatur und einen bestimmten Druck aufweisen muss. Allerdings ist der vom Dampfkessel erzeugte Dampf zunächst meist überhitzt, so dass dieser auf eine niedrigere Temperatur abgekühlt werden muss. Hierzu verwendet man sogenannte Einspritzkühler, die unmittelbar in die Rohrleitung eingesetzt werden und ein Kühlmittel, beispielsweise Wasser, in den Dampfstrom einspritzen. Das eingespritzte Wasser wird aufgrund des Differenzdrucks zwischen dem Wasser und dem Dampf in der Rohrleitung zerstäubt. Es verdampft und überhitzt, während der Dampf selbst abkühlt.

Bekannte Einspritzkühler bestehen gewöhnlich aus einem Gehäuse mit einem Zulauf für das Kühlwasser und einem in die Rohrleitung hineinragenden Einspritzzylinder, der mehrere nebeneinander angeordnete Einspritzdüsen trägt. In dem Gehäuse ist eine Regelspindel geführt, die mit einem Ende in dem mit dem Gehäuse verbundenen Einspritzzylinder gelagert ist und dort im Bereich der Einspritzdüsen einen Lochkegel trägt. Abhängig von der Temperatur in der Rohrleitung wird die Spindel angetrieben. Dabei führt sie eine Hubbewegung aus. Die einem Reglersignal entsprechende Hubstellung gibt einen bestimmten Steuerquerschnitt im Lochkegel für den Eintritt des Kühlwassers in dem Zylinder frei. Gleichzeitig werden Regelbohrungen zu den Düsenkammern in den Einspritzdüsen freigegeben, wodurch das Wasser in den Dampfstrom gelangt.

EP 0 682 762 B1 verwendet ebenfalls ein Hubsystem zur Steuerung der Kühlwassermenge, namentlich eine Kolbenstange, die in einer zwischen einer Wassereintrittsöffnung und den Einspritzdüsen angeordneten hohlzylindrischen Kühlwasserleitung axial geführt ist. Die Kolbenstange trägt innerhalb eines Düsenkopfes endseitig einen Regelkolben, der die Einspritzdüsen stellungsabhängig freigibt oder sperrt.

Derartige Einspritzkühler haben den Nachteil, dass der Regelkolben während seiner Stellbewegung die Düsenöffnungen nur anhand ihrer jeweils getroffenen linearen Anordnung der Reihe nach freigeben kann, d.h. die Einspritzdüsen können immer nur von oben nach unten oder von unten nach oben in feststehender Reihenfolge zugeschaltet werden, was sich innerhalb der Rohrleitung ungünstig auf die Wasserverteilung und damit ungünstig auf die Abkühlung des Heißdampfes auswirkt. Überdies werden die Dichtungen und Führungselemente des Kolbens und der Spindel aufgrund des meist sehr hohen Leitungsdrucks von 20 bar bis über 300 bar sehr stark beansprucht, so dass die Lebensdauer des Einspritzkühlers begrenzt ist. Kurze Wartungsintervalle sind die Folge; die Betriebskosten sind sehr hoch.

Um eine höhere Lebensdauer der Dichtungen und Führungselemente des Einspritzkühlers zu erreichen, sieht DE 85 33 682 U1 vor, dass die Regelspindel bzw. die Kolbenstange keine Hubbewegung mehr ausführt, sondern eine Drehbewegung. Dadurch erfolgt zum einen die Änderung der Regelquerschnitte der Einspritzdüsen über eine tangentiale Bewegung. Zum anderen können die meist in Längsrichtung des Einspritzzylinders angeordneten Einspritzdüsen um eine zentral angeordnete Einspritzdüse herum symmetrisch geöffnet und geschlossen werden, was sich günstig auf die Verteilung des Kühlwassers in der Rohrleitung auswirkt. Darüber hinaus wirkt sich der Schwenkkolben günstig auf die Baugröße des Einspritzkühlers aus, weil die Spindel bzw. die Kolbenstange nicht mehr aus dem Gehäuse herausfahren muss.

Problematisch hierbei ist jedoch, dass sich sämtliche beweglichen Teile des Einspritzkühlers weiterhin im Einspritzzylinder befinden, der innerhalb der Rohrleitung extremen Belastungen ausgesetzt ist, insbesondere dann, wenn die Dampftemperaturen in neueren Anlagen bei über 600 °C liegen und der Kühlwasserdruck über 300 bar beträgt. Der Verschleiß des Einspritzkühlers ist dadurch sehr hoch und es stehen in regelmäßigen Abständen aufwendige Wartungs- und Reparaturarbeiten an.

Um dem zu begegnen, schlägt NL 93 01 125 A1 vor, dass die Einspritzdüsen des Einspritzzylinders innerhalb der Rohrleitung liegen, während das Regelorgan mit seiner Ventilanordnung in einem Abstand davon außerhalb der Rohrleitung angeordnet ist. Damit sind das Regelorgan und die Einspritzdüsen räumlich voneinander getrennt und das Regelorgan ist nicht mehr den extremen Bedingungen innerhalb der Rohrleitung ausgesetzt.

Für die Versorgung der Einspritzdüsen mit Kühlwasser ist in NL 93 01 125 A1 für jede Düse eine eigene Wasserleitung vorgesehen, die zwischen dem Regelorgan und dem Einspritzzylinder angeordnet ist. Innerhalb des Einspritzzylinders sind Kanäle ausgebildet, die das Kühlwasser von einer zugeordneten Wasserleitung zu der jeweils zugehörigen Einspritzdüse führt. Innerhalb des Regelorgans ist eine Kolbenstange vorgesehen, die in einer zylindrischen Kammer einen Regelkolben trägt. Dieser gibt - je nach Hubstellung - die einzelnen zu den Einspritzdüsen führenden Wasserleitungen frei.

Damit ist zwar innerhalb der Rohrleitung kein bewegliches Element mehr im Einspritzzylinder vorhanden. Von Nachteil hierbei ist jedoch, das sämtliche Kühlwasserleitungen einzeln an das Regelorgan und den Einspritzzylinder angeschlossen werden müssen, was entsprechend aufwendig und teuer ist.

Problematisch ist ferner, dass die Wasserleitungen und damit auch die Einspritzdüsen aufgrund der Hubbewegung des Kolbens stets nur in vorgegebener Reihenfolge nacheinander freigegeben werden können, was zu einer ungleichmäßigen Kühlwasserverteilung innerhalb der Rohrleitung führt. Der Hubkolben muss überdies stets gegen den in der Rohrleitung herrschenden Dampfdruck arbeiten, so dass im Anschlusskopf des Regelorgans eine Entlastungsbohrung notwendig ist. Sind alle Zuleitungen geschlossen, besteht mithin die Gefahr, dass aufgrund des hohen Wasserdrucks stets Wasser aus den Einspritzdüsen in die Rohrleitung hinein tropft, was sich ungünstig auf eine genaue Regelung der Dampftemperatur auswirkt.

DE 20 2010 009 860 U1 zeigt einen Einspritzkühler zur Kühlung von in einer Rohrleitung geführtem Heißdampf, welcher eine Einspritzeinrichung aufweist, die mit der Rohrleitung verbunden werden kann und mit mehreren Einspritzdüsen versehen ist, welche ein Regelelement aufweisen, das mittels eines Anschlusses an eine Kühlmittelversorgung anschließbar ist.

WO 94/17330 A1 zeigt einen Dampfkühler, insbesondere einen Dampfkondensierer zur Reduzierung der Dampftemperatur, welche Kühlwasser in eine Dampfströmung einspritzt.

DE 43 17 241 A1 zeigt eine Anordnung zum Kühlen von strömendem Heißdampf mittels Zumischen von vernebeltem Kühlwasser, das über eine oder mehrere Düsen deartig in den Heißdampfstrom eingespritzt wird, dass die notwendige dem jeweiligen Dampfdurchfluss zugeordnete Kühlwasserleistung durch Öffnen oder Schließen des die Düsen durchfließenden Kühlwasserstromes eingestellt wird und jeder Düse oder Düsengruppe ein besonderes AUF/ZU-Stellglied zugeordnet ist.

Ein weiterer Nachteil der bekannten Einspritzkühler besteht darin, dass das Kühlmittel, das über die Einspritzdüsen in die Rohrleitung eingebracht wird, häufig nicht ausreichend fein zerstäubt wird. Stattdessen werden üblicherweise nur verhältnismäßig große Tropfen gebildet. Eine gleichmäßige Verteilung des Kühlwassers über die gesamte Querschnittsfläche der Rohrleitung findet entweder gar nicht oder nicht rasch genug statt. All dies verringert die Effektivität des Einspritzkühlers und kann zudem eine ungleichmäßige Temperaturverteilung des Dampfes in der Rohrleitung zur Folge haben.

Ziel der Erfindung ist es, diese und weitere Nachteile des Standes der Technik zu vermeiden und einen verbesserten Einspritzkühler zu schaffen, der eine verbesserte Verwirbelung und Durchmischung des Kühlmittels in einem Rohleitungssystem bewirkt, wobei eine verbesserte Verteilung des Kühlwassers innerhalb eines Durchmischungsabschnitts erfolgen soll Die Aufgabe wird durch die kennzeichnenden Merkmale von Anspruch 1 gelöst.Ausgestaltungen sind Gegenstand der Ansprüche 2 bis 11.

Erfindungsgemäß wurde ein Einspritzkühler zur Kühlung von in einer Strömungsrichtung in einer Rohrleitung geführtem Heißdampf, mit einer Einspritzeinrichtung gefunden, wobei die Einspritzeinrichtung mit der Rohrleitung verbindbar ist, mehrere Einspritzdüsen aufweist. Die Einspritzeinrichtung ist mit einem Regelorgan versehen, das mit einem Anschluss an eine Kühlmittelversorgung anschließbar ist, wobei in dem Regelorgan eine Ventilanordnung vorgesehen ist, mit der die Kühlmittelzuführung zu den Einspritzdüsen der Einspritzeinrichtung regelbar ist, und mit Kühlmittelzuführleitungen, die zwischen der Einspritzeinrichtung und dem Regelorgan angeordnet sind, wobei für jede Einspritzdüse eine separate Kühlmittelzuführleitung vorgesehen ist, die den Einspritzeinrichtung zugeordneten Enden der Kühlmittelzuführleitungen an einer gemeinsamen ersten Flanschplatte befestigt sind und die an einer Aufnahmefläche an der Einspritzeinrichtung fixierbarund die dem Regelorgan zugeordneten Enden der Kühlmittelzuführleitungen an einer gemeinsamen zweiten Flanschplatte befestigt sind. Die Kühlmittelzuleitungen sind an einer Aufnahmefläche des Regelorgans fixierbar. Die Einspritzeinrichtung weist einen rohrförmigen Durchmischungsabschnitt auf, der mit der Rohrleitung verbindbar ist, wobei der Durchmischungsabschnitt entlang einer Längsachse einen lavaldüsenartigen Längsschnitt aufweist, wobei die Einspritzdüsen und/oder die zugehörige Düsenzuleitung wenigstens abschnittsweise in einer Wandung des Durchmischungsabschnitts angeordnet sind, und wenigstens zwei Einspritzdüsen in Umfangsrichtung zueinander beabstandet an oder in dem Durchmischungsabschnitt angeordnet sind, wobei vor dem kegel- oder trichterförmigen Endabschnitt schräg gegenüber der Längsachse (L) angeordnete Einspritzdüsen mit einem Drall- oder Mischeinsatz angordnet sind.

Die bei einem erfindungsgemäßen Einspritzkühler zwischen der Einspritzeinrichtung und dem Regelorgan vorgesehenen Kühlmittelzuführleitungen sorgen zunächst dafür, dass das Regelorgan in einem Abstand von der Einspritzeinrichtung und damit außerhalb der Dampfleitung angeordnet werden kann. Dies verringert das Auftreten von belastungsbedingten Funktionsstörungen des Regelorgans erheblich und wirkt sich daher vorteilhaft auf die Reparaturkosten und die Lebensdauer des Einspritzkühlers aus.

Die erfindungsgemäß vorgesehenen Flanschplatten der Kühlmittelzuführleitungen ermöglichen eine ebenso einfache wie rasche Montage des Einspritzkühlers, weil die jeweils an einer Flanschplatte befestigten Enden der Kühlmittelzuführleitungen in nur einem Montageschritt gemeinsam an der Einspritzeinrichtung bzw. an dem Regelorgan angeschlossen werden. Im Gegensatz zu den vorbekannten Lösungen müssen die Leitungen mithin nicht mehr einzeln an der Einspritzeinrichtung oder dem Regelorgan angeschraubt und abgedichtet werden. Dies erfolgt vielmehr gruppenweise, was nicht nur den Arbeitsaufwand deutlich reduziert, sondern auch die Gefahr von Leckagen und Montagefehlern deutlich vermindert.

Der Durchmischungsabschnitt der Einspritzeinrichtung, der eine lavaldüsenartige Verjüngung und Aufweitung vorsieht, bewirkt ein Strömungsprofil, das gewährleistet, dass das über die Einspritzdüsen in diesem Abschnitt eingebrachte Kühlmittel rasch und gleichmäßig über den gesamten Rohrquerschnitt verteilt wird. Gleichzeitig wird das eingebrachte Kühlmittel in dem Durchmischungsabschnitt zusätzlich zerstäubt, wodurch eine kleine Tropfengröße des Kühlmittels erreicht wird. Dies ermöglicht eine äußerst effiziente und gleichmäßige Kühlung des Heißdampfes durch das fein verteilte Kühlmittel.

Ein weiterer Vorteil des erfindungsgemäßen Einspritzkühlers besteht darin, dass dieser im Bedarfsfall schnell und einfach in einzelne Komponenten zerlegt werden kann. So werden beispielsweise durch einfaches Abmontieren einer Flanschplatte mehrere Kühlwasserzuführleitungen auf einmal abmontiert, was sich günstig auf die Montage- und Wartungskosten auswirkt. Ferner besteht die Möglichkeit, den Einspritzkühler modulartig aufzubauen und sowohl die Einspritzeinrichtung und das Regelorgan, als auch die über die Flanschplatten beiderseits zusammengefassten Kühlmittelzuführleitungen als vormontierte Baueinheiten auszubilden. Dementsprechend sieht die Erfindung vor, dass die Kühlmittelzuführleitungen und die Flanschplatten eine Flanschbaugruppe bilden. Eine bevorzugte Ausgestaltung der Erfindung beinhaltet, dass die Einspritzdüsen in dem Durchmischungsabschnitt angeordnet sind. Auf diese Weise wird das Kühlmittel zügig nach dem Einbringen in den Durchmischungsabschnitt fein zerstäubt und gleichmäßig verteilt. Die

Einspritzdüsen sind im Bereich einer kegel- oder trichterförmigen Aufweitung des lavaldüsenartigen Durchmischungsabschnitts angeordnet. Gerade in diesem Bereich findet aufgrund des Strömungsprofils des mitgeführten Heißdampfes, das durch die lavaldüsenartige Gestaltung des Durchmischungsabschnitts erzielt wird, eine feine Zerstäubung der enthaltenen Flüssigkeit und eine effektive Durchmischung aller mitgeführten Komponenten statt. Das eingebrachte Kühlmittel wird bei einer Anordnung im Bereich der Aufweitung daher ohne jede Verzögerung unmittelbar nach dem Einbringen fein zerstäubt und gleichmäßig verteilt und bewirkt daher direkt eine sehr effiziente und rasche Abkühlung des Heißdampfes.

Die Kühlmittelzufuhr zur Einspritzeinrichtung wird über die Kühlmittelzuführleitungen bewirkt und über das Regelorgan gesteuert. Eine wichtige Ausführungsform sieht mithin vor, dass die Einspritzeinrichtung mehrere Düsenzuleitungen umfasst, die jeweils mit einer zugeordneten Einspritzdüse verbunden sind. Über die einzelnen Düsenzuleitungen ist ebenfalls eine separate Versorgung und Steuerung verschiedener Einspritzdüsen möglich.

Um das Einspritzen des Kühlmittels möglichst einfach zu gestalten, ist es bevorzugt, dass jede Einspritzdüse eine Düsenöffnung aufweist, die derart angeordnet ist, dass das Kühlmittel im Wesentlichen radial und in Strömungsrichtung in den Durchmischungsabschnitt einbringbar ist.

Für eine besonders effiziente Zerstäubung des Kühlmittels ist vor jeder Düsenöffnung ein Drall- oder Mischeinsatz angeordnet .

Weiterhin ist vorgesehen, dass die Einspritzdüsen und/oder die zugehörige Düsenzuleitung wenigstens abschnittsweise in einer Wandung des Durchmischungsabschnitts angeordnet sind. Vorteilhaft hierbei sind insbesondere die robuste und kompakte Bauweise. Dies gilt besonders für Ausführungsformen, bei denen die Einspritzdüsen und/oder die Düsenzuleitung vollständig in der Rohrwandung integriert sind. Beispielsweise kann die Düsenzuleitung von einem Kanal in der Rohrwandung ausgebildet sein. In diesem Fall ist es zweckmäßig, wenn auch die Aufnahmefläche für die Flanschplatte der Kühlmittelzuführleitungen auf einer Außenfläche des rohrförmigen Durchmischungsabschnitts ausgebildet ist. Dadurch ergibt sich ein insgesamt kompakter Aufbau des Einspritzkühlers, insbesondere der Einspritzeinrichtung.

Denkbar ist aber auch, dass die Düsenzuleitungen und/oder die Einspritzdüsen zumindest teilweise aus der Rohrwandung hinausragen. Die Düsenzuleitungen sind dabei als separate Rohrleitungen ausgebildet, wobei in diesem Fall auch das Aufnahmemittel mit der Aufnahmefläche für die Flanschplatte der Kühlmittelzuführleitungen separat von dem Durchmischungsabschnitt Bei Bedarf können die Einspritzdüsen auch teilweise in einen Innenraum des rohrförmigen Durchmischungsabschnitts hineinragen.

Wenigstens zwei Einspritzdüsen sind in Umfangsrichtung zueinander beanstandet an oder in dem Durchmischungsabschnitt angeordnet. Auf diese Weise können die Einspritzdüsen gleichmäßig über den Umfang des rohrförmigen Durchmischungsabschnitts verteilt werden. Sind in einem Bereich z.B. vier Einspritzdüsen vorgesehen, so können diese beispielsweise jeweils um 90° versetzt angeordnet sein.

Die Einspritzeinrichtung weist bevorzugt ein Aufnahmemittel auf, an dem die Auflagefläche für die erste Flanschplatte ausgebildet ist. Die Flanschplatte und die daran befestigten Kühlmittelzuleitungen werden mithin an dem Aufnahmemittel montiert. Es ist günstig, wenn das Aufnahmemittel der Einspritzeinrichtung im Bereich der Aufnahmefläche für die erste Flanschplatte im Querschnitt eckig, beispielsweise quadratisch, rechteckig oder mehreckig ausgebildet ist. Die Flanschplatten liegen flächig auf dem Aufnahmemittel auf und sind gegenüber der Aufnahmefläche abgedichtet. Die Fixierung erfolgt bevorzugt mittels Schrauben oder mittels Bolzen und Muttern.

Um eine Anbindung der Kühlmittelzuführleitungen an die Einspritzdüsen zu gewährleisten, ist jede Düsenzuleitung über eine zugeordnete Öffnung im Aufnahmemittel in der ersten Flanschplatte mit einer zugeordneten Kühlmittelzuführleitung strömungsverbunden. Auf diese Weise wird mit dem Aufsetzen und Fixieren der ersten Flanschplatte auf dem Aufnahmemittel der Einspritzeinrichtung automatisch jede Kühlmittelzuführleitung ihre zugehörige Einspritzdüse korrekt zugeordnet. Montagefehler sind somit ausgeschlossen. Bei einer quadratischen oder kreisringartigen Ausgestaltung von Flanschplatte und Aufnahmefläche kann eine planmäßige Montage der beiden Bauteile zudem erleichtert werden in dem eines der Teile z.B. eine nasenartige Ausformung und das andere Bauteil eine dazu korrespondierende Vertiefung aufweist. Denkbar ist aber auch das Anbringen von entsprechenden Markierungen.

Das Regelorgan weist bevorzugt ein Gehäuse auf, wobei die Aufnahmefläche für die zweite Flanschplatte an einer Außenfläche des Gehäuses ausgebildet ist. Diese Ausgestaltung ermöglicht, dass die Kühlmittelzuführleitungen nicht nur rasch, zuverlässig und fehlerfrei an der Einspritzeinrichtung, sondern auch an dem Regelorgan montiert werden können. Das Gehäuse des Regelorgans ist hierzu im Bereich der Aufnahmefläche für die zweite Flanschplatte bevorzugt im Querschnitt eckig ausgebildet, beispielsweise quadratisch, rechteckig oder mehreckig. Die Flanschplatten können so flächig aufgesetzt und zuverlässig abgedichtet werden.

Die Ventilanordnung, die in dem Regelorgan vorgesehen ist, weist einen Regelzylinder auf, der im Bereich der Aufnahmefläche im Gehäuse angeordnet ist. Daneben umfasst die Ventilanordnung einen Regelzylinder, der im Bereich der Aufnahmefläche im Gehäuse angeordnet ist, wobei der Regelzylinder mittels einer Regelspindel, die endseitig aus dem Gehäuse des Regelorgans herausragt, bewegbar ist. An der Regelspindel kann damit ein Antrieb angreifen, beispielsweise ein Motor, Getriebe oder ein Stellhebel.
In einer wichtigen Ausführungsform ist der Regelzylinder mit einer Längsausnehmung und radialen Steueröffnungen versehen, die mit dem Anschluss für die Kühlmittelversorgung strömungsverbunden sind, wobei für jede Einspritzdüse der Einspritzeinrichtung und deren zugeordnete Kühlmittelzuführleitung eine Steueröffnung vorgesehen ist. Dabei ist es möglich, die Einspritzdüsen der Einspritzeinrichtung einzeln über die Kühlmittelzuführleitungen mit Kühlmittel zu versorgen, was sich günstig auf die Betriebssicherheit auswirkt. Falls eine der Kühlmittelzuführleitungen durch eine Störung ausfallen sollte, bleiben die übrigen Kühlmittelzuführleitungen davon unberührt. Ferner besteht die Möglichkeit jede Einspritzdüse gezielt zu regeln, um innerhalb der der Dampfleitung eine optimale Kühlwirkung zu erzielen.

Eine wichtige Ausführungsform der Erfindung sieht vor, dass jede Steueröffnung im Regelzylinder über eine zugeordnete Öffnung im Gehäuse des Regelorgans und über eine der jeweiligen Öffnung zugeordnete Ausnehmung in der zweiten Flanschplatte mit der der jeweiligen Einspritzdüse zugeordneten Kühlmittelzuführleitung strömungsverbunden ist. Damit erfolgt bei der Montage der Flanschplatten automatisch eine planmäßige Zuordnung der Kühlmittelzuführleitung zu den zugehörigen Steueröffnungen, d.h. es können keine Montagefehler auftreten.

Mit Vorteil ist der Regelzylinder um eine Längsachse des Gehäuses drehbar gelagert, wobei der Öffnungsquerschnitt jeder Öffnung im Gehäuse des Regelorgans durch eine Drehbewegung des Regelzylinders veränderbar ist. Damit findet innerhalb des Gehäuses des Regelorgans keine Hubbewegung statt, was eine äußerst kompakte Bauweise des Regelorgans ermöglicht. Die Drehbewegung sorgt vielmehr dafür, dass die Größe der Querschnitte in den Öffnungen im Gehäuse des Regelorgans durch eine rein tangentiale Bewegung verändert werden. Dadurch wird die Lebensdauer der Dichtungen und Führungselemente innerhalb des Regelorgans deutlich erhöht. Ein weiterer Vorteil der Drehbewegung besteht darin, dass die Steueröffnungen die jeweils zugeordneten Öffnungen im Gehäuse des Regelorgans und damit die einzelnen Kühlmittelzuführleitungen nahezu individuell öffnen und schließen können, so dass innerhalb der Rohrleitung eine äußerst gleichmäßige Kühlwasserverteilung erzielt werden kann.

Bei Bedarf können die Steueröffnungen zumindest abschnittsweise schlitzförmig ausgebildet sein. Diese Steuerschlitze liegen auf dem Umfang des Regelzylinders versetzt zueinander und in unterschiedlichen Höhen, so dass die Öffnungen für die Kühlwasserzuführleitungen gezielt nacheinander und symmetrisch zueinander geöffnet und geschlossen werden.

Um auch an dem Regelorgan mehrere Gruppen von Kühlwasserzuführleitungen anschließen zu können, sind an dessen Gehäuse wenigstens zwei Aufnahmeflächen zur Aufnahme von zweiten Flanschplatten vorgesehen. Man kann allerdings auch hier drei oder mehr Aufnahmeflächen vorsehen, wobei das Gehäuse mit drei oder vier Aufnahmeflächen im Querschnitt bevorzugt quadratisch ausgebildet ist, während mit fünf oder mehr Aufnahmeflächen ein fünf oder sechseckiger Gehäusequerschnitt verwendet wird. In jedem Fall können auf nahezu allen Seitenflächen der Einspritzeinrichtung ein oder mehrere Flanschplatten mit Kühlmittelzuführleitungen montiert werden. Jede Flanschplatte fasst dabei mehrere Kühlmittelzuführleitungen zu einer Gruppe zusammen, die ihrerseits als vormontierte Baueinheiten zur Verfügung gestellt werden.

Bildet man die erste und die zweite Flanschplatte der Kühlwasserzuführleitungen identisch aus, wird die Handhabung und die Montage des Systems noch weiter vereinfacht, weil die Flanschplatten sowohl an der Einspritzeinrichtung als auch an dem Regelorgan montiert werden können. Die Ventilanordnung weist in einer weiteren Ausgestaltung der Erfindung ein Kugelventil auf, das zwischen dem Regelzylinder und dem Anschluss für die Kühlmittelversorgung angeordnet ist. Ferner kann es zweckmäßig sein, wenn zwischen dem Regelzylinder und dem Anschluss für die Kühlmittelversorgung eine Drosseleinrichtung angeordnet.

Je nach Kühlbedarf kann ein erfindungsgemäßer Einspritzkühler auch mehrere (separate) Einspritzeinrichtungen aufweisen, die mit der Rohrleitung des Kraftwerks verbindbar sind. Dabei können die Einspritzeinrichtungen von einem gemeinsamen Regelorgan gesteuert werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: einen Einspritzkühler in einer Rohrleitung mit einem Regelorgan und einer dazwischen vorgesehenen Flanschbaugruppe nach dem Stand der Technik;
- Fig. 1b: eine Schnittansicht der in Fig. 1 a dargestellten Einspritzeinrichtung;
- Fig. 2: eine Einspritzeinrichtung eines erfindungsgemäßen Einspritzkühlers;
- Fig. 3: eine Schnittansicht der in Fig. 2 gezeigten Einspritzeinrichtung;
- Fig. 4: eine Seitenansicht eines Regelorgans eines erfindungsgemäßen Einspritzkühlers; und
- Fig. 5: eine Schnittansicht des in Fig. 4 gezeigten Regelorgans;
- Fig. 6: zwischen einem Regeorgan und einer Einspritzeinrichtung eines erfindungsgemäßen Einspritzkühlers vorgesehene Kühlmittelzuführleitungen als Flanschbaugruppe.

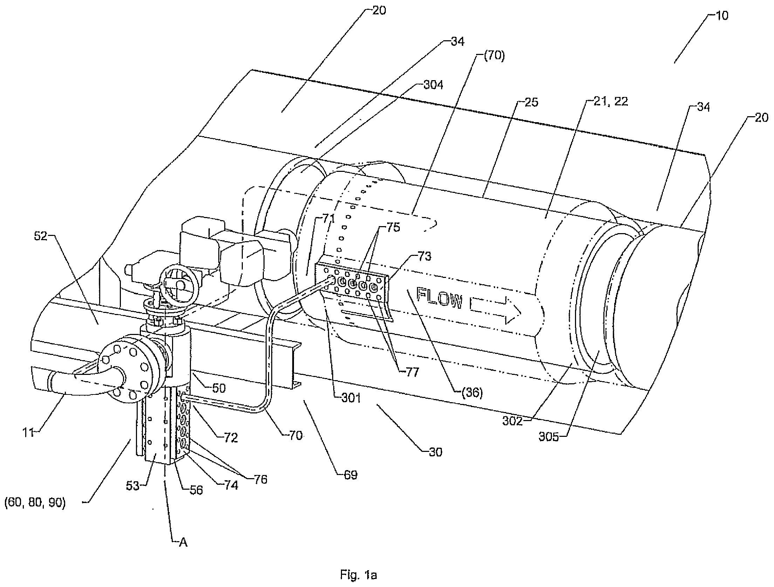

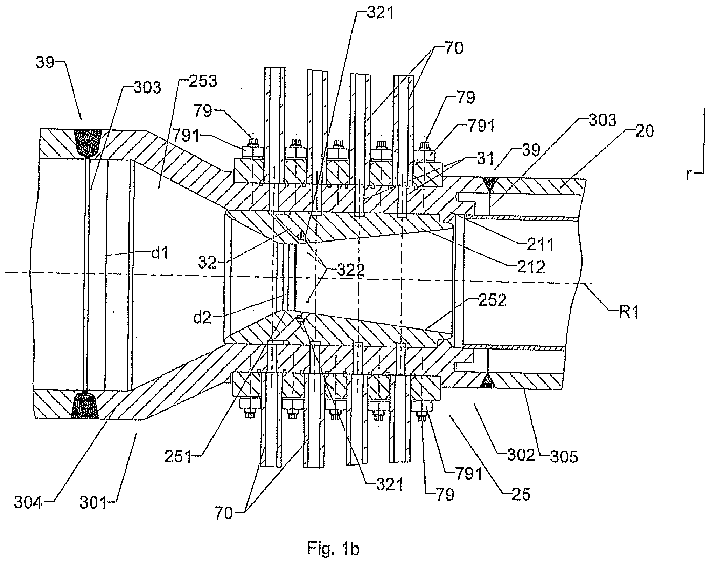

Der in Fig. 1 a allgemein mit 10 bezeichnete Einspritzkühler ist für den Einsatz in einem (nicht näher gezeigten) Kraftwerk konzipiert. Er soll Heißdampf, der in einer Rohrleitung 20 der Kraftwerksanlage geführt wird, auf eine vorgegebene Temperatur abkühlen, indem ein flüssiges Kühlmittel, beispielweise Wasser, in die Rohrleitung 20 bzw. in den darin geführten Dampfstrom eingespritzt wird.

Der Einspritzkühler 10 hat hierzu eine Einspritzeinrichtung 30, die einen rohrförmigen Durchmischungsabschnitt 25 mit Einspritzdüsen 32 aufweist, ein Regelorgan 50, das über einen Kühlmittelanschluss 52 an eine Kühlmittelversorgung 11 angeschlossen ist, sowie mehrere Kühlmittelzuführleitungen 70, welche die Einspritzeinrichtung 30 mit dem Regelorgan 50 verbinden.

Der Durchmischungsabschnitt 25 weist an seinen Enden 301, 302 jeweils eine Anschlussstelle 304, 305 auf. Mit diesen wird er mit der Rohrleitung 20 des Kraftwerks verbunden, wobei man -wie in Fig. 1 a gezeigt - eine Muffenverbindung 34 ausbildet oder - wie in Fig. 1b dargestellt -die Anschlussstellen 304, 305 auf Stoß mit den Rohrleitungsenden der Rohrleitung 20 verbindet, vorzugsweise mittels einer Schweißverbindung 39. In jedem Fall bildet der Durchmischungsabschnitt 25 ein Rohrsegment 22 mit einer Rohrwandung 21, das dicht in die Rohrleitung 20 integriert ist. Anstelle der Muffenverbindung 34 oder der Schweißverbindung 35 kann man zwischen dem Durchmischungsabschnitt 25 und der Rohrleitung 20 auch eine (nicht dargestellte) Flanschverbindung vorsehen, die mit entsprechenden Flanschabschnitten ausgestattet ist.

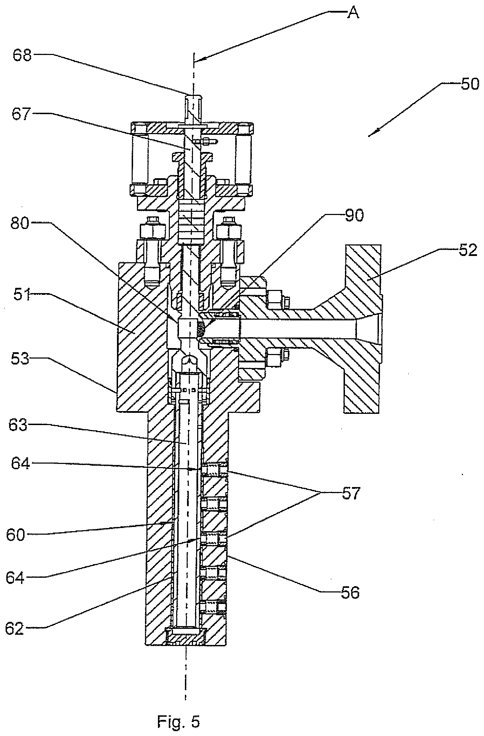

Innerhalb des Durchmischungsabschnitts 25 weist die Einspritzeinrichtung 30 mehrere, in Fig. 1a nicht gezeigte, über den Umfang verteilte radiale Einspritzdüsen 32 auf, die das Kühlmittel innerhalb des Rohrsegments 22 im Wesentlichen radial und in Strömungsrichtung R1 des Heißdampfes einsprühen (vergleiche dazu Fig. 1 b). Das Regelorgan 50, das mit einem Flanschanschluss 52 an die Kühlmittelversorgung 11 angeschlossen ist, regelt dabei über eine Ventil- und Drosselanordnung 60, 80, 90 (siehe dazu Fig. 5) die Menge und den Druck des in die Rohrleitung 20 bzw. in den Dampfstrom einzuspritzenden Kühlmittels.

Zwischen der Einspritzeinrichtung 30 und dem Regelorgan 50 sind die Kühlmittelzuführleitungen 70 vorgesehen, von denen in Fig. 1a zur besseren Übersicht jedoch nur eine vollständig gezeigt ist.

Die der Einspritzeinrichtung 30 zugeordneten Enden 71 der Kühlmittelzuführleitungen 70 sind an einer ersten Flanschplatte 73 befestigt, die an einer in dieser Darstellung nicht näher gezeigten Aufnahmefläche 36 an der Einspritzeinrichtung 30 fixierbar ist. Die Größe der Aufnahmefläche 36 und die Größe der Flanschplatte 73 sind derart aufeinander abgestimmt, dass letztere mit ihrer Auflagefläche 78 plan und vollflächig auf der Aufnahmefläche 36 aufliegt. Für die Festlegung der Flanschplatte 73 sind in der Aufnahmefläche 36 randseitig Gewindebohrungen 361 eingebracht, die deckungsgleich mit Bohrungen 77 in der Flanschplatte73 angeordnet sind, so dass letztere mit der Einspritzeinrichtung 30 fest verschraubt und zuverlässig abgedichtet werden kann.

Man erkennt, dass bei der in Fig. 1 a dargestellten Ausführungsform die Aufnahmefläche 36 der Einspritzeinrichtung 30 auf der Rohrwandung 21 des Durchmischungsabschnitts 25 vorgesehen ist. Die dem Regelorgan 50 zugeordneten Enden 72 der Kühlmittelzuführleitungen 70 sind an einer zweiten Flanschplatte 74 befestigt, die an einer Aufnahmefläche 56 des Regelorgans 50 fixiert wird.

Die beiden Flanschplatten 73, 74 der Kühlmittelzuführleitungen 70 verfügen im Ausführungsbeispiel der Fig. 1a und 1b über jeweils fünf Bohrungen 75, 76 zur Aufnahme von insgesamt fünf einzelnen Kühlmittelzuführleitungen 70. Diese fünf Kühlmittelzuführleitungen 70 bilden zusammen mit den Flanschplatten 73, 74 eine Flanschbaugruppe B, die kostengünstig hergestellt werden kann und die bei der Verbindung der Einspritzeinrichtung 30 mit dem Regelorgan 50 einfach zu handhaben ist.

Je nach Anzahl und Anordnung der Einspritzdüsen 32 innerhalb der Einspritzeinrichtung 30 sind mehrere Flanschbaugruppen B vorgesehen. Hierzu werden beispielsweise zwei, drei, vier oder mehr erste Flanschplatten 73 in gleichmäßigen oder ungleichmäßigen Abständen auf dem Außenumfang der Rohrwandung 21 des Durchmischungsabschnitts 25 befestigt. Letzterer ist hierzu mit der entsprechenden Anzahl an Aufnahmeflächen 36 versehen, die sich über den Umfang der Rohrwandung 21 verteilen. Entsprechend der Anzahl an Flanschbaugruppen B können auch ein oder mehrere Regelorgane 50 verwendet werden, von denen jede zwei oder drei zweite Flanschplatten aufnimmt. Eine (nicht dargestellte) zentrale Steuereinheit regelt die einzelnen Regelorgane 50, so dass die in dem Durchmischungsabschnitt 25 vorgesehenen Einspritzdüsen 32 einzeln und individuell angesteuert werden können.

Bei einem noch höheren Kühlbedarf kann der Einspritzkühler 10 auch mehrere Einspritzeinrichtungen 30 aufweisen, die mit der Rohrleitung 20 des Kraftwerks verbunden sind. Auch diese Einspritzeinrichtungen 30 können z.B. von einem oder mehreren gemeinsamen Regelorganen 50 gesteuert werden. Denkbar ist auch, dass mehrere erfindungsgemäße Einspritzkühler 10 in der Rohrleitung vorgesehen sind.

In der Ausführungsform von Fig. 1b sind auf dem Außenumfang der Rohrwandung 21 des Durchmischungsabschnitts 25 zwei Aufnahmeflächen 36 einander gegenüberliegend angeordnet. Um die ersten Flanschplatten 73 der Kühlmittelzuführleitungen 70 an den Aufnahmeflächen 36 bzw. an dem Aufnahmemittel 33 zu fixieren sind hier beispielsweise Schraubbolzen 79 vorgesehen, an denen die Flanschplatten mittels Muttern 791 fixiert werden. Anstelle von Schraubbolzen 79 und Muttern 791 können auch (nicht dargestellte) Schrauben verwendet werden, die in entsprechende Gewindebohrungen eingreifen.

Man erkennt ferner in Fig. 1b, dass jede Kühlmittelzuführleitung 70 und die ihr zugeordnete Einspritzdüse 32 über je eine Düsenzuleitung 31 miteinander verbunden sind. Letztere verlaufen ausgehend von den Aufnahmeflächen 36 innerhalb der Rohrwandung 21 des Rohrsegments 22 bzw. des Durchmischungsabschnitts 25, wobei die Rohrwandung 21 insgesamt zweitgeteilt ausgebildet ist. Ein erster Wandabschnitt 211 bildet den äußeren Teil der Rohrwandung 21 sowie die Anschlussstelle 305 am Ende 302 des Durchmischungsabschnitts 25. Ein zweiter Wandabschnitt 212 hingegen bildet den inneren Teil der Rohrwandung 21 sowie die Anschlussstelle 304 am Ende 301 des Durchmischungsabschnitts 25. Beide Wandabschnitte 211 sind formschlüssig ineinander gefügt und fest miteinander verbunden, vorzugsweise miteinander verschweißt.

Zwischen den Wandabschnitten 211, 212 sind die Düsenzuleitungen 31 ausgebildet, wobei ein (nicht näher bezeichneter) erster Abschnitt einer Düsenzuleitung 31 als Radialbohrung in dem ersten Wandabschnitt 211 ausgebildet ist, während ein zweiter (ebenfalls nicht näher bezeichneter) Abschnitt in den Außenumfang des zweiten Wandabschnitts 212 eingebracht ist. Beide Abschnitte sind miteinander strömungsverbunden. Sie münden in die jeweils zugeordnete Einspritzdüse 32, die als Düsenbohrung in einem Winkel schräg zur Längsachse L in den zweiten Wandabschnitt 212 eingebracht ist.

Wie die Schnittansicht der Fig. 1b weiter zeigt, weist jede in der Rohrwandung 21 bzw. in dem zweiten Wandabschnitt 212 ausgebildete Einspritzdüse 32 im Anschluss an die Düsenbohrung einen kegel- oder trichterförmigen Endabschnitt 321 auf, der in eine Düsenöffnung 322 mündet. Durch die Schräganordnung der Einspritzdüsen 32 wird das Kühlmittel im Wesentlichen radial und in Strömungsrichtung R1 in den Durchmischungsabschnitt 25 eingebracht und durch die verengten Düsenöffnungen 322 gleichzeitig zerstäubt. Unabhängig von alledem sind die Einspritzdüsen 32 bevorzugt über den Umfang des Durchmischungsabschnitts 25 gleichmäßig verteilt angeordnet, was sich weiter günstig auf die gleichmäßige Verteilung des Kühlmittels im Dampfstrom auswirkt.

Man erkennt in Fig. 1b, dass der rohrartige Durchmischungsabschnitt 25 insgesamt eine Lavaldüse bildet, wobei die Einspritzdüsen 32 im Bereich einer kegel- oder trichterförmigen Aufweitung 252 des Durchmischungsabschnitts 25 angeordnet sind. Strömungsaufwärts der Aufweitung 252 ist in dem Durchmischungsabschnitt 25 eine Engstelle 251 vorgesehen, die sich - entgegen der Strömungsrichtung R1 - in einem weiteren kegel- oder trichterförmigen Abschnitt 253 wieder aufweitet. Die kegel- oder trichterförmige Aufweitung 252 und die Engstelle 251 sind in dem zweiten Wandabschnitt 212 ausgebildet, während der weitere kegel-oder trichterförmige Abschnitt 253 sowohl von dem ersten als auch von dem zweiten Wandabschnitt 211, 212 gebildet wird. Durch die Engstelle 251 wird der Innendurchmesser des rohrförmigen Durchmischungsabschnitts 25 von einem ersten Durchmesser d1 am ersten Ende 304 zunächst auf einen zweiten Durchmesser d2 verengt, um sich anschließend zum zweiten Ende 302 hin wieder auf einen größeren Durchmesser zu erweitern.

Diese lavaldüsenartige Ausgestaltung des Durchmischungsabschnitts 25 bewirkt ein Strömungsprofil, das gewährleistet, dass das über die Einspritzdüsen 32 in den Dampfstrom eingebrachte Kühlmittel rasch und gleichmäßig über den gesamten Rohrquerschnitt verteilt wird. Gleichzeitig wird das eingebrachte Kühlmittel in dem Durchmischungsabschnitt 25 zusätzlich zerstäubt, wodurch sehr kleine Tropfengrößen des Kühlmittels erreicht werden.

All dies gewährleistet eine äußerst effiziente und gleichmäßige Kühlung des Heißdampfes durch das fein verteilte Kühlmittel.

Jede Einspritzdüse 32 ist über die ihr zugeordnete Düsenzuleitung 31 mit einer ebenfalls zugeordneten Kühlmittelzuführleitung 70 verbunden, die über die zweiten Flanschplatten 74 an das Regelorgan 50 angeschlossen sind. Dessen Gehäuse 51 ist mit entsprechenden Aufnahmeflächen 56 für die zweiten Flanschplatten 74 versehen. Je nach Bedarf und den gegebenen Platzverhältnissen kann die Zahl der an den Flanschplatten 73, 74 befestigten Kühlmittelzuführleitungen 70 variieren. Wichtig ist stets, dass die Kühlmittelzuführleitungen 70 und die zugehörigen Flanschplatten 73, 74 eine vorgefertigte Flanschbaugruppe B bilden, damit die Kühlmittelzuführleitungen 70 nicht alle einzeln angeschlossen werden müssen, und dass über jede Einspritzdüse 32 und die jeweils zugeordnete Kühlmittelzuführleitung 70 nach Bedarf Kühlwasser in den in der Rohrleitung 20 geführten Heißdampf eingebracht werden kann.

Dementsprechend ist für jede Einspritzdüse 32 der Einspritzeinrichtung 30 eine separate Kühlmittelzuführleitung 70 vorgesehen. Man erkennt zudem, dass es durch die Ausbildung der Kühlmittelzuführleitungen 70 als Flanschbaugruppen B möglich ist, das Regelorgan 50 in einem definierten Abstand von dem Einspritzzylinder 30 und damit außerhalb der in modernen Kraftwerken oft über 600 °C heißen Dampfleitung 20 anzuordnen. Dadurch befinden sich keine bewegten Teile innerhalb des extrem heißen Leitungsbereichs, was sich äußerst günstig auf die Lebensdauer der Einspritzeinrichtung 30 und des Regelorgans 50 auswirkt. Ferner ist der Montageaufwand der , Kühlwasserzuführleitungen 70 auf ein Minimum reduziert, weil diese als Flanschbaugruppen B rasch und bequem an der Einspritzeinrichtung 30 und dem Regelorgan 50 montiert werden können. Darüber hinaus ist der Austausch einzelner Komponenten des Einspritzkühlers 10 rasch und bequem möglich, denn durch die einfache Montage und Demontage der Flanschplatten 73, 74 kann auch das Regelorgan 50 schnell und wirtschaftlich ausgetauscht oder zu Reparaturzwecken ein- und ausgebaut werden.

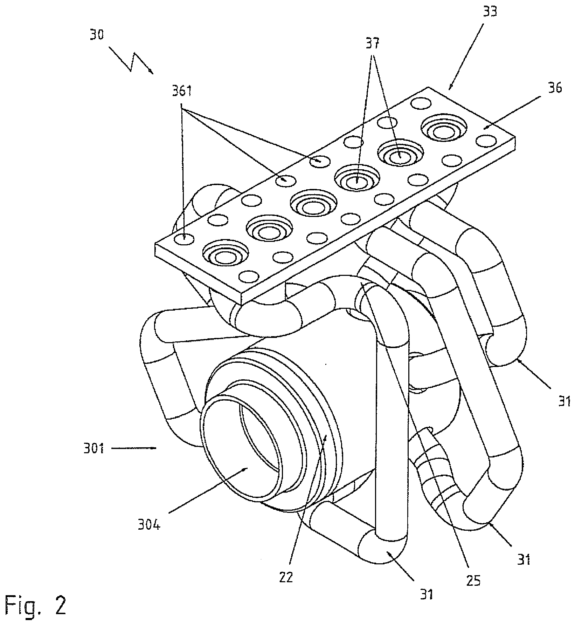

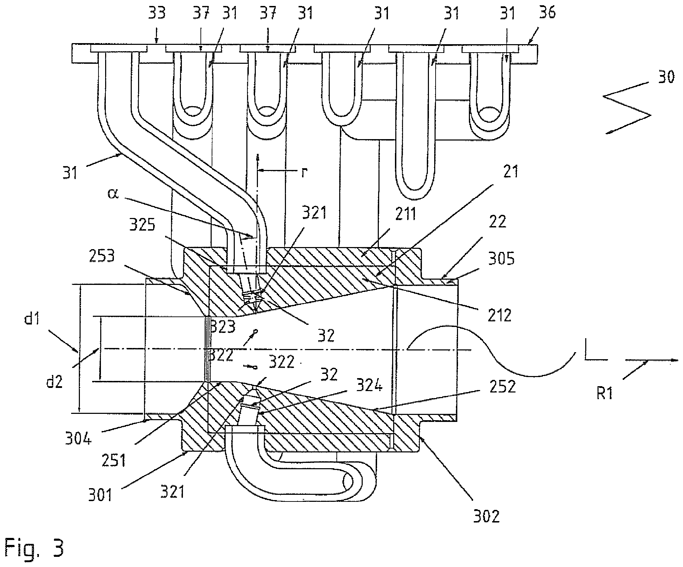

Die Fig. 2 und 3 zeigen eine Einspritzeinrichtung 30 eines erfindungsgemäßen Einspritzkühlers 10, wobei gleiche Bezugszeichen jeweils gleiche Bauteile benennen.

Die hier gezeigte Einspritzeinrichtung 30 weist ein von dem Durchmischungsabschnitt 25 beabstandet angeordnetes Aufnahmemittel 33 auf, welches die Aufnahmefläche 36 für die Flanschplatten 73 der Kühlmittelzuführleitungen 70 trägt. An der Aufnahmefläche 36 ist mithin jeweils eine erste Flanschplatte 73 fixierbar. In dem Aufnahmemittel 33 sind insgesamt sechs Öffnungen 37 vorgesehen, die jeweils mit einer Düsenzuleitung 31 verbunden sind. Durch diese kann das Kühlmittel von den Kühlmittelzuführleitungen 70 aus den jeweiligen Einspritzdüsen 32 zugeführt werden.

Die Anzahl und Anordnung der Öffnungen 37 in der Aufnahmeflächen 36 entspricht - wie auch im Ausführungsbeispiel der Fig. 1 a und 1 b - der Anzahl und Anordnung der Ausnehmungen 75 in der jeweils zugeordneten Flanschplatte 73 und damit der Anzahl an Kühlmittelzuführleitungen 70, die an der Flanschplatte 73 vorgesehen sind. Liegt diese in bestimmungsgemäßem Zustand mit ihrer Auflagefläche 78 auf der zugeordneten Aufnahmefläche 36 des Aufnahmemittels 33 auf, dann liegen die Öffnungen 37 und die Ausnehmungen 75 in der Flanschplatte 73 kongruent übereinander, so dass das Kühlmittel ungehindert von der Kühlmittelzuführleitung 70 in die jeweils zugeordnete Düsenzuleitung 31 einströmen kann.

Das Aufnahmemittel 33 ist bevorzugt eine Flanschplatte 33. Deren Größe und die Größe der Flanschplatte 73 sind derart aufeinander abgestimmt, dass letztere mit ihrer Auflagefläche 78 plan und vollflächig auf der Aufnahmefläche 36 aufliegt. Für die Festlegung der Flanschplatte 73 sind in der Flanschplatte 33 randseitig Gewindebohrungen 361 eingebracht, die deckungsgleich mit Bohrungen 77 in der Flanschplatte 73 angeordnet sind, so dass letztere mit der Einspritzeinrichtung 30 fest und dicht verschraubt werden kann.

Die Einspritzeinrichtung 30 weist ferner einen rohrförmigen Durchmischungsabschnitt 25 auf, der an seinen Enden 301, 302 jeweils mit einem Halsabschnitt 304,305 versehen ist. Dieser bildet z.B. einen Teil einer Rohrmuffenverbindung 34, welche den Durchmischungsabschnitt 25 mit der Rohrleitung 20 des Kraftwerks verbindet. Der Durchmischungsabschnitt 25 wird damit zum Rohrsegment 22 der Rohrleitung 20 und der Einspritzkühler ist dicht in die Rohrleitung 20 integriert. Anstelle der Rohrmuffenverbindung 34 kann man zwischen dem Durchmischungsabschnitt 25 und der Rohrleitung 20 auch eine (nicht dargestellte) Flanschverbindung vorsehen, die mit entsprechenden Flanschabschnitten ausgestattet ist oder eine Stoßverbindung, die verschweißt ist.

Man erkennt in der Schnittdarstellung von Fig. 3, dass auch hier jede Kühlmittelzuführleitung 70 und die ihr zugeordnete Einspritzdüse 32 über je eine Düsenzuleitung 31 miteinander verbunden sind. Letztere verlaufen jedoch nicht innerhalb der Rohrwandung 21 des Durchmischungsabschnitts 25, sondern als separate Rohrabschnitte außerhalb der Rohrwandung 21. Diese ist auch hier insgesamt zweitgeteilt ausgebildet ist. Ein erster Wandabschnitt 211 bildet den äußeren Teil der Rohrwandung 21 sowie die Anschlussstelle 305 am Ende 302 des Durchmischungsabschnitts 25. Ein zweiter Wandabschnitt 212 bildet den inneren Teil der Rohrwandung 21 sowie die Anschlussstelle 304 am Ende 301 des Durchmischungsabschnitts 25. Beide Wandabschnitte 211 sind formschlüssig ineinander gefügt und fest miteinander verbunden, vorzugsweise miteinander verschweißt. Die Anschlussstellen 304, 305 bilden Halsansätze, die Teil einer Muffenverbindung 34 sein können.

Jede Düsenzuleitung 31 setzt als separater Rohrabschnitt an der ihr jeweils zugeordneten Flanschplatte 33 an und mündet im ersten Wandabschnitt 211, der mit einer entsprechenden (nicht näher bezeichneten) Aufnahmeöffnung versehen ist. Letztere sind mit Kanalabschnitten 325 strömungsverbunden, die in den Außenumfang des zweiten Wandabschnitts 212 eingebracht sind und in die jeweils zugeordneten Einspritzdüsen 32 münden, die als Düsenbohrungen in einem Winkel α schräg zur Längsachse L in den zweiten Wandabschnitt 212 eingebracht ist.

Wie die Schnittansicht der Fig. 3 weiter zeigt, weist jede in der Rohrwandung 21 bzw. in dem zweiten Wandabschnitt 212 ausgebildete Einspritzdüse 32 im Anschluss an die Düsenbohrung einen kegel- oder trichterförmigen Endabschnitt 321 auf, der in eine Düsenöffnung 322 mündet. Durch die Schräganordnung der Einspritzdüsen 32 wird das Kühlmittel im Wesentlichen radial und in Strömungsrichtung R1 in den Durchmischungsabschnitt 25 eingebracht und durch die verengten Düsenöffnungen 322 gleichzeitig zerstäubt. Unabhängig von alledem sind die Einspritzdüsen 32 bevorzugt über den Umfang des Durchmischungsabschnitts 25 gleichmäßig verteilt angeordnet, was sich weiter günstig auf die gleichmäßige Verteilung des Kühlmittels im Dampfstrom auswirkt.

Man erkennt auch hier, dass die Rohrinnenfläche des Durchmischungsabschnitts 25 der Einspritzeinrichtung 30 insgesamt eine Lavaldüse bildet, wobei die Einspritzdüsen 32 im Bereich der kegel- oder trichterförmigen Aufweitung 252 des Durchmischungsabschnitts 25 angeordnet sind. Strömungsaufwärts der Aufweitung 252 ist die Engstelle 251 vorgesehen, die sich -entgegen der Strömungsrichtung R1 - in den weiteren kegel- oder trichterförmigen Abschnitt 253 aufweitet. Durch die Engstelle 251 wird der Innendurchmesser des rohrförmigen Durchmischungsabschnitts 25 von einem ersten Durchmesser d1 im Halsabschnitt 304 zunächst auf einen zweiten Durchmesser d2 verengt, um sich anschließend wieder auf den Durchmesser d1 zu erweitern.

Diese lavaldüsenartige Ausgestaltung des Durchmischungsabschnitts 25 bewirkt ein Strömungsprofil, das gewährleistet, dass das über die Einspritzdüsen 32 in den Dampfstrom eingebrachte Kühlmittel rasch und gleichmäßig über den gesamten Rohrquerschnitt verteilt wird. Gleichzeitig wird das eingebrachte Kühlmittel in dem Durchmischungsabschnitt 25 zusätzlich zerstäubt, wodurch sehr kleine Tropfengrößen des Kühlmittels erreicht werden.

All dies gewährleistet eine äußerst effiziente und gleichmäßige Kühlung des Heißdampfes durch das fein verteilte Kühlmittel.

Jede Einspritzdüse 32 hat auch hier im Anschluss an die Düsenbohrung im zweiten Wandabschnitt 212 einen kegel- oder trichterförmigen Endabschnitt 321, der in einer Düsenöffnung 322 mündet. Dadurch wird das Kühlmittel im Wesentlichen radial und in Strömungsrichtung R1 in den Durchmischungsabschnitt 25 eingebracht und durch die verengten Düsenöffnungen 322 optimal zerstäubt. Diese sind über den Umfang des Durchmischungsabschnitts 25 gleichmäßig verteilt angeordnet, was sich weiter günstig auf die gleichmäßige Verteilung des Kühlmittels im Dampfstrom auswirkt.

In der Ausführungsform der Fig. 3 ist vor dem kegel- oder trichterförmigen Endabschnitt 321 der Einspritzdüse 32 ein Drall- oder Mischeinsatz 323 angeordnet, der bereits innerhalb der Düsenbohrung eine Verwirbelung und Durchmischung des Kühlmittels bewirkt, was sich äußerst günstig auf die Verteilung des Kühlwassers innerhalb des Durchmischungsabschnitts 25 auswirkt.

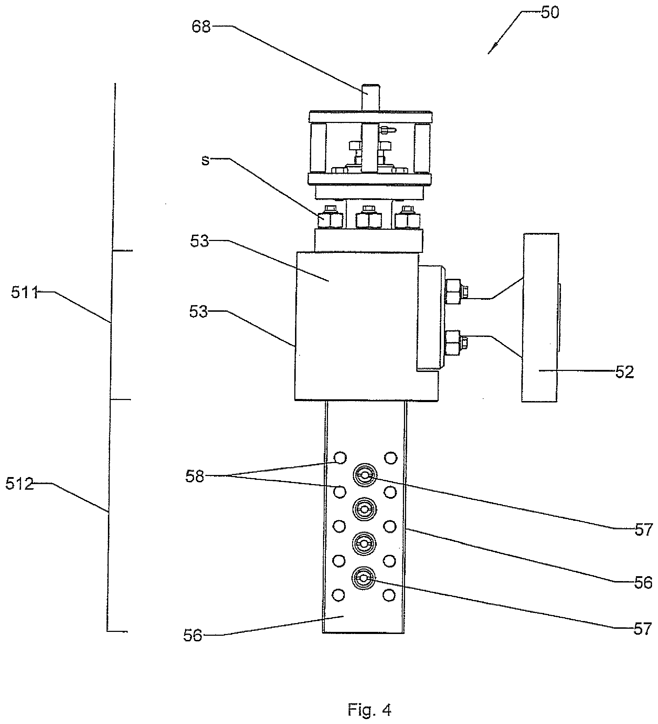

Fig. 4 zeigt das Regelorgan 50 mit seinem Gehäuse 51 , das in einem ersten, dem Kühlmittelanschluss 52 zugewandten Abschnitt 511 im Wesentlichen zylindrisch ausgebildet ist, während ein zweiter, der Flanschbaugruppe B zugewandter Abschnitt 512 im Querschnitt quadratisch ausgebildet ist, wobei die Außenfläche 53 des Gehäuses 51 im Bereich des zweiten Abschnitts 512 vier ebene Seitenflächen 56 bildet. Letztere dienen als Aufnahmeflächen für die zweiten Flanschplatten 74 der Flanschbaugruppe B. Die Größe der Aufnahmeflächen 56 und die Größe der Flanschplatten 74 sind derart aufeinander abgestimmt, dass letztere mit ihren Auflageflächen 78 plan und vollflächig auf den Aufnahmeflächen 56 aufliegen. Für die Festlegung der Flanschplatten 74 sind in den Aufnahmeflächen 56 randseitig Gewindebohrungen 58 eingebracht, die deckungsgleich mit den Bohrungen 77 in den Flanschplatten 74 angeordnet sind, so dass letztere mit dem Gehäuse 51 des Regelorgans 50 fest verschraubt werden können.

Wie Fig. 4 weiter zeigt, sind in den Aufnahmeflächen 56 des Gehäuses 51 Öffnungen 57 eingebracht, durch die das Kühlmittel aus dem Regelorgan 50 ausströmen kann. Die Anzahl und Anordnung der Öffnungen 57 in einer Aufnahmeflächen 56 entspricht der Anzahl und Anordnung der Ausnehmungen 76 in der jeweils zugeordneten Flanschplatte 74 und damit der Anzahl an Kühlmittelzuführleitungen 70, die an der Flanschplatte 74 vorgesehen sind. Liegt diese in bestimmungsgemäßem Zustand mit ihrer Auflagefläche 78 auf der zugeordneten Aufnahmefläche 56 des Gehäuses 51 auf, dann liegen die Öffnungen 57 und die Ausnehmungen 76 in der Flanschplatte 74 kongruent übereinander, so dass das Kühlmittel ungehindert von dem Regelorgan 50 in die Kühlmittelzuführleitungen 70 einströmen kann. In den Aufnahmeflächen 56 und den Flanschplatten 74 können jeweils die gleiche Anzahl an Öffnungen 57 bzw. Ausnehmungen 76 vorgesehen sein. Man kann aber auch in den verschiedenen Flächen eine unterschiedliche Anzahl an Öffnungen 57 bzw. Ausnehmungen 76 vorsehen.

Die Öffnungen 57 münden - wie in Fig. 5 dargestellt - innerhalb des Gehäuses 51 in einem im Wesentlichen zylindrischen Hohlraum, in dem eine Ventilanordnung 60 ausgebildet ist. Diese umfasst im Bereich der Aufnahmeflächen 56 für die Flanschplatten 74 einen Regelzylinder 62, der mittels einer Regelspindel 67 um die Längsachse A des Regelorgans 50 drehbar gelagert ist. Die Regelspindel 67 ist in einer (nicht näher bezeichneten) Lagerhülse mit Stopfbuchspackung gelagert. Sie ragt mit einem Ende 68 endseitig aus dem Gehäuse 51 des Regelorgans 50 heraus und wird dort mit einem (nicht näher dargestellten) Stellantrieb verbunden ist, der mechanisch, hydraulisch, pneumatisch oder elektrisch arbeiten kann.

Der Regelzylinder 62 hat eine zentrische Längsausnehmung 63, die innerhalb des Gehäuses 51 mit dem Anschluss 52 für die Kühlmittelversorgung strömungsverbunden ist und die umfangsseitig mit radialen Steueröffnungen 64 versehen ist, wobei für jede Öffnung 57 und für jede Einspritzdüse 32 der Einspritzeinrichtung 30 und mithin für jede zugeordnete Kühlmittelzuführleitung 70 eine Steueröffnung 64 vorgesehen ist.

Stellt man den Regelzylinder 62 über die Regelspindel 67 in eine bestimmte Winkelposition relativ zu dem Gehäuse 51 , so werden ausgewählte Steueröffnungen 64 im Regelzylinder 62 über die jeweils zugeordneten Öffnungen 57 im Gehäuse 51 des Regelorgans 50 und über die den jeweiligen Öffnungen 57 zugeordneten Ausnehmungen 76 in der zweiten Flanschplatte 74 der Flanschbaugruppe B mit den jeweils zugeordneten Kühlmittelzuführleitungen 70 strömungsverbunden, so dass das Kühlwasser aus dem Regelorgan 50 heraus über die geöffneten Kühlmittelzuführleitungen 70 in die der Einspritzzylinder 30 zugeordneten Düsenzuleitungen 31 einströmen kann, um von dort aus durch die jeweils zugeordneten Einspritzdüsen 32 hindurch in den Durchmischungsabschnitt 25 bzw. die Rohrleitung 20 strömen kann. Der Öffnungsquerschnitt jeder Öffnung 57 im Gehäuse 50 des Regelorgans 50 ist hierbei durch die Drehbewegung des Regelzylinders 62 um die Achse A veränderbar, so dass die jeweils zugeordnete Kühlmittelzuführleitung 70 freigegeben und der Kühlmittelstrom geregelt werden kann. Bevorzugt sind die Steueröffnungen 64 zumindest abschnittsweise schlitzförmig ausgebildet. Sie können jedoch auch rund oder oval ausgebildet sein.

Das Regelorgan 50 hat - je nach Anzahl der Einspritzdüsen 32 - wenigstens eine, bevorzugt jedoch wenigstes zwei bis vier Aufnahmeflächen 56 für die zweiten Flanschplatten 74 der Flanschbaugruppe B. Man kann den zweiten Abschnitt 512 des Gehäuses 51 aber auch fünf-oder sechseckig ausbilden, um auf diese Weise fünf oder mehr Flanschbaugruppen B an das Regelorgan 50 anschließen zu können.

Neben dem Regelzylinder 62 weist die Ventilanordnung 60 im Bereich des ersten Gehäuseabschnitts 51 1 ein Kugelventil 80 auf. Mit diesem kann der Kühlmittelzufluss von dem Anschluss 52 in das Gehäuse 51 bei Bedarf zusätzlich vollständig abgesperrt werden. Das Kugelventil 80 ist bevorzugt zwischen dem Regelzylinder 62 und dem Anschluss 52 für die Kühlmittelversorgung angeordnet. Hier kann überdies eine Drosseleinrichtung 90 vorgesehen sein, die den Druck des aus dem Anschluss 52 in das Regelorgan 50 einströmenden Kühlmittels regelt, um beispielsweise höhere Differenzdrücke beherrschen zu können.

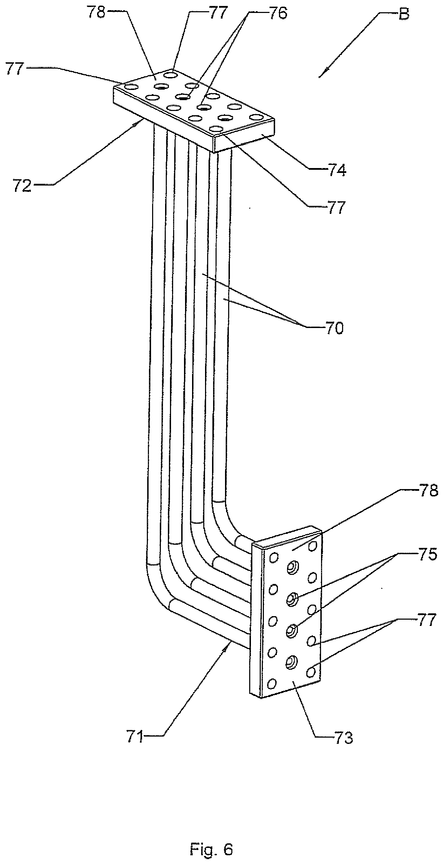

In Fig. 6 sind zwischen einem Regeorgan 50 und einer Einspritzeinrichtung 30 eines erfindungsgemäßen Einspritzkühlers 10 vorgesehene Kühlmittelzuführleitungen 70 und die beiden zugehörigen Flanschplatten 73,74 dargestellt. Die Kühlmittelzuführleitungen 70 und die gemeinsamen Flanschplatten 73,74 bilden eine Flanschbaugruppe B.

In den Flanschplatten 73, 74 sind Ausnehmungen 75, 76 vorgesehen, die jeweils paarweise mit einer zugeordneten Kühlmittelzuführleitung 70 strömungsverbunden sind, so dass das Kühlmittel ungehindert durch die Flanschplatten 73, 74 und die Kühlmittelzuführleitungen 70 hindurch strömen kann. Die Ausnehmungen 75, 76 sind linear in einer Reihe angeordnet, wobei die Kühlmittelzuführleitungen 70 - soweit möglich - parallel und mit konstantem Abstand zueinander verlaufen. Dies gewährleistet eine einfache Geometrie sowohl der Einspritzeinrichtung 30 als auch des Regelorgans 50, die quer zu Ihren Längsachsen A insgesamt schmal ausgebildet werden kann. Man kann die Ausnehmungen 75, 76 und die Kühlmittelzuführleitungen 70 bei Bedarf aber auch in einer anderen Anordnung vorsehen, beispielsweise versetzt oder schräg nebeneinander oder in Form einer Matrix.

In jeder Flanschplatte 73, 74 sind randseitig Bohrungen 77 zur Aufnahme von Schrauben eingebracht, so dass die Flanschplatten 73, 74 mit der Einspritzeinrichtung 30 und dem Regelorgan 50 fest verschraubt werden können. Dadurch wird jeder Kühlmittelzuführleitung 70, die an einer Flanschplatte 73 angeschlossen ist und die mittels dieser Flanschplatte 73 an der Aufnahmefläche der Einspritzeinrichtung montiert ist, bevorzugt eine Einspritzdüse 32 fest zugeordnet. Diese werden individuell und einzeln über die Düsenzuleitungen 31 der Einspritzeinrichtung 30 mit Kühlmittel versorgt, wobei Montagefehler aufgrund der eindeutigen Zuordnungen nicht möglich sind. Gleichzeitig ist jedoch jede Einspritzdüse 32 der Einspritzeinrichtung 30 mit einer separaten Kühlmittelzuführleitung 70 verbunden, so dass die Einspritzdüsen 32 über das Regelorgan 50 einzeln angesteuert und individuell mit Kühlmittel versorgt werden können.

Mit dem erfindungsgemäßen Einspritzkühler 10 können Differenzdrücke zwischen Kühlwasser und Heißdampf bei feinster Zerstäubung des Kühlwassers geregelt werden, wobei eine sofortige und vollständige Vermischung des Kühlmediums mit dem Dampfstrom stattfindet. Abhängig von der Temperatur des in der Rohrleitung 20 strömenden Heißdampfes, wird die Regelspindel 67 über den nicht dargestellten Antrieb innerhalb des Gehäuses 51 geschwenkt, so dass eine tangentiale Bewegung der Steueröffnungen 64 stattfindet. Entsprechend dieser Bewegung werden unterschiedliche Steuerquerschnitte der Steueröffnungen 64 gegenüber den Öffnungen 57 im Gehäuse 51 und den Ausnehmungen 76 in den zweiten Flanschplatten 74 der Flanschbaugruppen B freigegeben, wodurch das Kühlwasser in die jeweils offenen Kühlmittelzuführleitungen 70 und über die ersten Flanschplatten 73 in die Einspritzeinrichtung 30 einströmen kann.

Die Erfindung ist nicht auf eine der vorbeschriebenen Ausführungsformen beschränkt, sondern in vielfältiger Weise abwandelbar. Man erkennt, dass bei einem Einspritzkühler 10 zur Kühlung von in einer Rohrleitung 20 geführtem Heißdampf, mit einer mit der Rohrleitung 20 verbundenen Einspritzeinrichtung 30, die mehrere Einspritzdüsen 32 aufweist, mit einem Regelorgan 50, das mit einem Anschluss 52 an eine Kühlmittelversorgung 11 anschließbar ist, wobei in dem Regelorgan 50 eine Ventilanordnung 60 vorgesehen ist, mit der die Kühlmittelzuführung zu den Einspritzdüsen 32 der Einspritzeinrichtung 30 regelbar ist, und mit Kühlmittelzuführleitungen 70, die zwischen der Einspritzeinrichtung 30 und dem Regelorgan 50 vorgesehen sind, wobei für jede Einspritzdüse 32 eine separate Kühlmittelzuführleitung 70 vorgesehen ist, sieht die Erfindung vor, dass die der Einspritzeinrichtung 30 zugeordneten Enden 71 der Kühlmittelzuführleitungen 70 an einer gemeinsamen ersten Flanschplatte 73 befestigt sind, die an einer Aufnahmefläche 36 an der Einspritzeinrichtung 30 fixierbar ist, und dass die dem Regelorgan 50 zugeordneten Enden 72 der Kühlmittelzuführleitungen 70 an einer gemeinsamen zweiten Flanschplatte 74 befestigt sind, die an einer Aufnahmefläche 56 des Regelorgans 50 fixierbar ist, und dass die Einspritzeinrichtung 30 einen rohrförmigen Durchmischungsabschnitt 25 aufweist, der mit der Rohrleitung 20 verbunden ist, und dass der Durchmischungsabschnitt 25 eine Verjüngung 251 und eine in Strömungsrichtung R1 nach der Verjüngung 251 angeordnete Aufweitung 252 aufweist, wobei die Kühlmittelzuführleitungen 70 und die Flanschplatten 73, 74 eine Flanschbaugruppe B bilden, die zwischen dem Einspritzkühler 30 und dem Regelorgan 50 montierbar ist

Man erkennt zudem, dass der Durchmischungsabschnitt 25 der Einspritzeinrichtung 30 insgesamt eine Lavaldüse bildet, wobei die Einspritzdüsen 32 im Bereich einer kegel- oder trichterförmigen Aufweitung 252 des Durchmischungsabschnitts 25 angeordnet sind.

**Bezugszeichenliste**

| | |
|---|---|
| A Längsachse | 20 Rohrleitung |
| B Flanschbaugruppe | 21 Rohrwandung |
| L Längsachse | 211 erster Wandabschnitt |
| S Schraube | 212 zweiter Wandabschnitt |
| r Radialrichtung | 22 Rohrsegment |
| R1 Strömungsrichtung | 25 Durchmischungsabschnitt |
| d1 erster Durchmesser | 251 Engstelle |
| d2 zweiter Durchmesser | 252 Aufweitung |
| α Winkel | 253 weiterer Abschnitt |
| | 30 Einspritzeinrichtung |
| 10 Einspritzkühler | 301 Ende |
| 11 Kühlmittelversorgung | 302 Ende |
| 304 Anschlussstelle | 57 Öffnung |
| 305 Anschlussstelle | 58 Gewindebohrungen |
| 31 Düsenzuleitung | 60 Ventilanordnung |
| 32 Einspritzdüsen | 62 Regelzyiinder |
| 321 Endabschnitt | 63 Längsausnehmung |
| 322 Düsenöffnung | 64 Steueröffnung |
| 323 Drall- oder Mischeinsatz | 67 Regelspindel |
| 324 erster Abschnitt | 68 Ende |
| 325 Kanalabschnitt | 69 Profilkörper |
| 33 Aufnahmemittel/Flanschplatte | 70 Kühlmittelzuführleitung |
| 34 Muffenverbindung | 71 Ende |
| 36 Aufnahmefläche | 72 Ende |
| 361 Gewindebohrung | 73 erste Flanschplatte |
| 37 Öffnung | 74 zweite Flanschplatte |
| 38 Gewindebohrungen | 75 Bohrung |
| 39 Schweißverbindung | 76 Bohrung |
| 50 Regelorgan | 77 Bohrung |
| 51 Gehäuse | 771 Schraube |
| 511 erster Abschnitt | 78 Auflageflächen |
| 512 zweiter Abschnitt | 80 Kugelventil |
| 52 Anschluss | 90 Drosseleinrichtung |
| 53 Außenfläche | |
| 56 Aufnahmefläche | |
| 79 Schraubbolzen | |
| 791 Mutter | |

## Patentansprüche

1. Einspritzkühler (10) zur Kühlung von in einer Strömungsrichtung (R1) in einer Rohrleitung (20) geführtem Heißdampf,
a) mit einer Einspritzeinrichtung (30), die mit der Rohrleitung (20) verbindbar ist und die mehrere Einspritzdüsen (32) aufweist,
b) mit einem Regelorgan (50), das mit einem Anschluss (52) an eine Kühlmittelversorgung anschließbar ist,
c) wobei in dem Regelorgan (50) eine Ventilanordnung (60) vorgesehen ist, mit der die Kühlmittelzuführung zu den Einspritzdüsen (32) der Einspritzeinrichtung (30) regelbar ist, und
d) mit Kühlmittelzuführleitungen (70), die zwischen der Einspritzeinrichtung (30) und dem Regelorgan (50) vorgesehen sind,
e) wobei für jede Einspritzdüse (32) eine separate Kühlmittelzuführleitung (70) vorgesehen ist,
f) wobei die der Einspritzeinrichtung (30) zugeordneten Enden (71) der Kühlmittelzuführleitungen (70) an einer gemeinsamen ersten Flanschplatte (73) befestigt sind, die an einer Aufnahmefläche (36) an der Einspritzeinrichtung (30) fixierbar ist,
g) wobei die dem Regelorgan (50) zugeordneten Enden (72) der Kühlmittelzuführleitungen (70) an einer gemeinsamen zweiten Flanschplatte (74) befestigt sind, die an einer Aufnahmefläche (56) des Regelorgans (50) fixierbar ist,
h) wobei die Einspritzeinrichtung (30) einen rohrförmigen Durchmischungsabschnitt (25) aufweist, der mit der Rohrleitung (20) verbindbar ist, wobei der Durchmischungsabschnitt (25) entlang einer Längsachse (L) einen lavaldüsenartigen Längsschnitt aufweist,
i) wobei die Einspritzdüsen (32) und/oder die zugehörige Düsenzuleitung (31) wenigstens abschnittsweise in einer Wandung (21) des Durchmischungsabschnitts (25) angeordnet sind, und
j) wenigstens zwei Einspritzdüsen (32) in Umfangsrichtung zueinander beanstandet an oder in dem Durchmischungsabschnitt (25) angeordnet sind,
k) wobei die Einspritzdüsen (32) schräg gegenüber der Längsachse (L) angeordnet sind und einen kegel- oder trichterförmigen Endabschnitt (321) aufweisen
**dadurch gekennzeichnet**,
l) dass in den Einspritzdüsen (32) vor dem kegel- oder trichterförmigen Endabschnitt (321) jeweils einen Drall- oder Mischeinsatz (323) angeordnet ist.

2. Einspritzkühler (10) gemäß Anspruch 1, **dadurch gekennzeichnet, dass** die Einspritzdüsen (32) in dem Durchmischungsabschnitt (25) angeordnet sind.

3. Einspritzkühler (10) gemäß einem der Ansprüche 1 oder 2, **dadurch gekennzeichnet, dass** die Einspritzdüsen (32) im Bereich einer kegel-oder trichterförmigen Aufweitung (252) des Durchmischungsabschnitts (25) angeordnet sind.

4. Einspritzkühler (10) gemäß einem der vorhergehenden Ansprüche, **dadurch gekennzeichnet, dass** die Einspritzeinrichtung (30) mehrere Düsenzuleitungen (31) umfasst, die jeweils mit einer zugeordneten Einspritzdüse (32) verbunden sind.

5. Einspritzkühler (10) gemäß einem der vorhergehenden Ansprüche, **dadurch gekennzeichnet, dass** jede Einspritzdüse (32) eine Düsenöffnung (321) aufweist, die im Wesentlichen radial und in Strömungsrichtung (R1) angeordnet ist.

6. Einspritzkühler (10) gemäß einem der vorhergehenden Ansprüche, **dadurch gekennzeichnet, dass** die Einspritzeinrichtung (30) ein Aufnahmemittel (33) aufweist, an dem die Auflagefläche (36) für die erste Flanschplatte (73) ausgebildet ist.

7. Einspritzkühler (10) gemäß einem der vorhergehenden Ansprüche, **dadurch gekennzeichnet, dass** jede Düsenzuleitung (31) über eine zugeordnete Öffnung (37) im Aufnahmemittel (33) in der ersten Flanschplatte (73) mit einer zugeordneten Kühlmittelzuführleitung (70) strömungsverbunden ist.

8. Einspritzkühler (10) gemäß einem der vorhergehenden Ansprüche, **dadurch gekennzeichnet, dass** das Regelorgan (50) ein Gehäuse (51) aufweist, wobei die Aufnahmefläche (56) für die zweite Flanschplatte (53) an einer Außenfläche (53) des Gehäuses (51) ausgebildet ist.

9. Einspritzkühler (10) nach Anspruch 8. **dadurch gekennzeichnet, dass** die Ventilanordnung (60) einen Regelzylinder (62) aufweist, der im Bereich der Aufnahmefläche (56) im Gehäuse (51) angeordnet ist, wobei der Regelzylinder (62) mit einer Längsausnehmung (63) und radialen Steueröffnungen (64) versehen ist, die mit dem Anschluss (52) für die Kühlmittelversorgung strömungsverbunden sind, wobei für jede Einspritzdüse (32) der Einspritzeinrichtung (30) und deren zugeordnete Kühlmittelzuführleitung (70) eine Steueröffnung (64) vorgesehen ist

10. Einspritzkühler (10) nach Anspruch 8 oder 9, **dadurch gekennzeichnet, dass** jede Steueröffnung (64) im Regelzylinder (62) über eine zugeordnete Öffnung (57) im Gehäuse (51) des Regelorgans (50) und über eine der jeweiligen Öffnung (57) zugeordnete Ausnehmung (76) in der zweiten Flanschplatte (74) mit der der jeweiligen Einspritzdüse (32) zugeordneten Kühlmittelzuführleitung (70) strömungsverbunden ist.

11. Einspritzkühler nach Anspruch 10 **dadurch gekennzeichnet, dass** der Regelzylinder (62) um eine Längsachse (A) des Gehäuses (51) drehbar gelagert ist, wobei der Öffnungsquerschnitt jeder Öffnung (57) im Gehäuse (50) des Regelorgans (50) durch eine Drehbewegung des Regelzylinders (62) veränderbar ist.

## Claims

1. An injection cooler (10) for cooling hot steam conducted in a flow direction (R1) in a pipeline (20),
a) having an injection device (30) which can be connected to the pipeline (20) and which has multiple injection nozzles (32),
b) having a regulating element (50) that can be connected by way of a connector (52) to a coolant supply,
c) wherein, in the regulating element (50), there is arranged a valve arrangement (60) by means of which the coolant feed to the injection nozzles (32) of the injection device (30) can be regulated, and
d) having coolant feed lines (70) that are provided between the injection device (30) and the regulating element (50),
e) wherein a separate coolant feed line (70) is provided for each injection nozzle (32),
f) wherein those ends (71) of the coolant feed lines (70) that are associated with the injection device (30) are fastened to a common first flange plate (73) which can be fixed to a mounting surface (36) on the injection device (30),
g) wherein those ends (72) of the coolant feed lines (70) that are associated with the regulating element (50) are fastened to a common second flange plate (74) which can be fixed to a mounting surface (56) of the regulating element (50),
h) wherein the injection device (30) has a tubular intermixing section (25) which can be connected to the pipeline (20), wherein the intermixing section (25) has a Laval-nozzle-like longitudinal section along a longitudinal axis (L),
i) wherein the injection nozzles (32) and/or the associated nozzle inlet line (31) are arranged, at least in sections, in a wall (21) of the intermixing section (25), and
j) at least two injection nozzles (32) are arranged, spaced apart from one another in the circumferential direction, on or in the intermixing section (25),
k) wherein the injection nozzles (32) are arranged lateral opposing to the longitudinal axis (L) and have a nozzle opening (321) that is conical or funnel-shaped,
**characterized in**
l) that a swirl or mixing insert (323) is arranged in front of the conical or funnel-shaped nozzle opening (321) in each of the injection nozzles (32).

2. The injection cooler (10) as claimed in claim 1, **characterized in that** the injection nozzles (32) are arranged in the intermixing section (25).

3. The injection cooler (10) as claimed in either of claims 1 and 2, **characterized in that** the injection nozzles (32) are arranged in the region of a conical or funnel-shaped widening (252) of the intermixing section (25).

4. The injection cooler (10) as claimed in one of the preceding claims, **characterized in that** the injection device (30) comprises multiple nozzle inlet lines (31) which are each connected to an associated injection nozzle (32).

5. The injection cooler (10) as claimed in one of the preceding claims, **characterized in that** each injection nozzle (32) has a nozzle opening (321), which is arranged substantially radially and in the flow direction (R1).

6. The injection cooler (10) as claimed in one of the preceding claims, **characterized in that** the injection device (30) has a mounting means (33) on which the support surface (36) for the first flange plate (73) is formed.

7. The injection cooler (10) as claimed in one of the preceding claims, **characterized in that** each nozzle inlet line (31) is connected in terms of flow to an associated coolant feed line (70) via an associated opening (37) in the mounting means (33) in the first flange plate (73).

8. The injection cooler (10) as claimed in one of the preceding claims, **characterized in that** the regulating element (50) has a housing (51), wherein the mounting surface (56) for the second flange plate (53) is formed on an outer surface (53) of the housing (51).

9. The injection cooler (10) as claimed in claim 8, **characterized in that** the valve arrangement (60) has a regulating cylinder (62) which is arranged in the housing (51) in the region of the mounting surface (56), wherein the regulating cylinder (62) is provided with a longitudinal recess (63) and with radial control openings (64) which are connected in terms of flow to the connector (52) for the coolant supply, wherein a control opening (64) is provided for each injection nozzle (32) of the injection device (30) and the coolant feed line (70) associated therewith.

10. The injection cooler (10) as claimed in claim 8 or 9, **characterized in that** each control opening (64) in the regulating cylinder (62) is connected in terms of flow via an associated opening (57) in the housing (51) of the regulating element (50), and via a recess (76), associated with the respective opening (57), in the second flange plate (74), to the coolant feed line (70) associated with the respective injection nozzle (32).

11. The injection cooler as claimed in claim 10, **characterized in that** the regulating cylinder (62) is mounted so as to be rotatable about a longitudinal axis (A) of the housing (51), wherein the opening cross section of each opening (57) in the housing (50) of the regulating element (50) can be varied by means of a rotational movement of the regulating cylinder (62).

## Revendications

1. Refroidisseur à injection (10) destiné à refroidir de la vapeur surchauffée guidée dans une canalisation (20) dans une direction d'écoulement (R1), lequel refroidisseur à injection comprend
a) un moyen d'injection (30) qui peut être relié à la canalisation (20) et qui comporte une pluralité de buses d'injection (32),
b) un élément de régulation (50) qui peut être raccordé à une alimentation en agent de refroidissement par un raccord (52),
c) l'élément de régulation (50) comportant un agencement de soupapes (60) qui permet de régler l'alimentation en agent de refroidissement des buses d'injection (32) du moyen d'injection (30), et
d) des conduits d'alimentation en agent de refroidissement (70) qui sont prévus entre le moyen d'injection (30) et l'élément de régulation (50),
e) un conduit d'alimentation en agent de refroidissement séparé (70) étant prévu pour chaque buse d'injection (32),
f) les extrémités (71) des conduits d'alimentation en agent de refroidissement (70), lesquelles sont associées au moyen d'injection (30), étant fixées à une première plaque de bride commune (73) qui peut être fixée au moyen d'injection (30) au niveau d'une surface de réception (36),
g) les extrémités (72) des conduits d'alimentation en agent de refroidissement (70), lesquelles sont associées à l'élément de régulation (50), étant fixées à une seconde plaque de bride commune (74) qui peut être fixée à l'élément de régulation (50) au niveau d'une surface de réception (56),
h) le moyen d'injection (30) comportant une partie de mélange tubulaire (25) qui peut être reliée à la canalisation (20), la partie de mélange (25) ayant le long d'un axe longitudinal (L) une section longitudinale du type une buse de Laval,
i) les buses d'injection (32) et/ou le conduit d'alimentation de buses associé (31) étant disposés au moins par endroits dans une paroi (21) de la partie de mélange (25), et
j) au moins deux buses d'injection (32) étant disposées sur ou dans la partie de mélange (25),
k) les buses d'injection (32) étant disposées obliquement par rapport à l'axe longitudinal (L) et comportant une partie d'extrémité (321) en forme de cône ou d'entonnoir,
**caractérisé en ce que**
l) un insert de turbulence ou de mélange (323) est disposé dans chacune des buses d'injection (32) en amont de la partie d'extrémité (321) en forme de cône ou d'entonnoir.

2. Refroidisseur à injection (10) selon la revendication 1, **caractérisé en ce que** les buses d'injection (32) sont disposées dans la partie de mélange (25).

3. Refroidisseur à injection (10) selon l'une quelconque des revendications 1 ou 2, **caractérisé en ce que** les buses d'injection (32) sont disposées dans la zone d'évasement en cône ou en entonnoir (252) de la partie de mélange (25).

4. Refroidisseur à injection (10) selon l'une des revendications précédentes, **caractérisé en ce que** le moyen d'injection (30) comprend une pluralité de conduits d'alimentation de buse (31) qui sont reliés chacun à une buse d'injection associée (32).

5. Refroidisseur à injection (10) selon l'une des revendications précédentes, **caractérisé en ce que** chaque buse d'injection (32) comporte une ouverture de buse (321) qui est disposée sensiblement radialement et dans la direction d'écoulement (R1).

6. Refroidisseur à injection (10) selon l'une des revendications précédentes, **caractérisé en ce que** le moyen d'injection (30) comporte un moyen de réception (33) sur lequel est formée la surface d'appui (36) destinée à la première plaque de bride (73).

7. Refroidisseur à injection (10) selon l'une des revendications précédentes, **caractérisé en ce que** chaque conduit d'alimentation de buse (31) est relié fluidiquement à un conduit d'alimentation en agent de refroidissement associé (70) par une ouverture associée (37) ménagé dans le moyen de réception (33) de la première plaque de bride (73).

8. Refroidisseur à injection (10) selon l'une des revendications précédentes, **caractérisé en ce que** l'élément de régulation (50) comprend un boîtier (51), la surface de réception (56) destinée à la seconde plaque de bride (53) étant formée au niveau d'une surface extérieure (53) du boîtier (51).

9. Refroidisseur à injection (10) selon la revendication 8, **caractérisé en ce que** l'agencement de soupapes (60) comprend un cylindre de régulation (62) qui est disposé dans le boîtier (51) dans la zone de la surface de réception (56), le cylindre de régulation (62) étant pourvu d'un évidement longitudinal (63) et d'ouvertures de commande radiales (64) qui sont reliés fluidiquement au raccord (52) destiné à l'alimentation en agent de refroidissement, une ouverture de commande (64) étant prévue pour chaque buse d'injection (32) du moyen d'injection (30) et de son conduit d'alimentation en agent de refroidissement associé (70).

10. Refroidisseur à injection (10) selon la revendication 8 ou 9, **caractérisé en ce que** chaque ouverture de commande (64), ménagée dans le cylindre de régulation (62), est reliée fluidiquement au conduit d'alimentation en agent de refroidissement (70), associé à la buse d'injection (32) respective, par une ouverture associée (57) ménagée dans le boîtier (51) de l'élément de régulation (50) et par un évidement (76), associé à l'ouverture respective (57), de la seconde plaque de bride (74).

11. Refroidisseur à injection selon la revendication 10, **caractérisé en ce que** le cylindre de régulation (62) est monté à rotation sur un axe longitudinal (A) du boîtier (51), la section de chaque ouverture (57) ménagée dans le boîtier (50) de l'élément de régulation (50) peut être modifiée par un mouvement de rotation du cylindre de régulation (62).
